# EUROPÄISCHE PATENTSCHRIFT

(11) **EP 0 825 149 B1**
(45) Veröffentlichungstag und Bekanntmachung des Hinweises auf die Patenterteilung: **04.09.2002**
(21) Anmeldenummer: 97710002.3
(22) Anmeldetag: 07.01.1997
(51) Int. Cl.: B67D 5/04, F16L 11/22

(54) **Verfahren und Vorrichtung zur Abgabe von unterschiedlichen Kraftstoffsorten an einer Zapfstelle**
Method and apparatus for dispensing kinds of fuel from one petrol pump
Procédé et dispositif de distribution de carburants de différents types d'un seul poste d'essence

(30) Priorität: 23.08.1996 EP 96113537
(43) Veröffentlichungstag der Anmeldung: 25.02.1998
(73) Patentinhaber: SCHEIDT & BACHMANN GMBH, D-41238 Mönchengladbach (DE)
(72) Erfinder: Baumann, Gerd, Dipl.-Ing., 52445 Titz (DE); Dahlmanns, Christoph, Dipl.-Ing., 51511 Geilenkirchen (DE); Welters, Josef, 41812 Erkelenz (DE)
(74) Vertreter: Stenger, Watzke & Ring Patentanwälte

(56) Entgegenhaltungen:
- EP-A- 0 080 591
- EP-A- 0 718 535
- AU-A- 4 917 172
- DE-U- 29 502 262
- DE-U- 29 614 661
- DE-U- 29 700 126
- FR-A- 1 065 308
- FR-A- 2 697 892
- GB-A- 994 567
- GB-A- 2 246 410
- GB-A- 2 290 848
- US-A- 2 663 325
- US-A- 3 590 890
- US-A- 4 260 183
- US-A- 4 938 251
- US-A- 5 203 384
- US-A- 5 285 826
- US-A- 5 343 738

## Beschreibung

Die Erfindung betrifft eine Vorrichtung zur Abgabe von unterschiedlichen Kraftstoffsorten an einer Zapfstelle mit mindestens einer aus einer Kraftstoff-Förderpumpe und einem Durchflußmesser bestehenden Kraftstoffabgabeeinrichtung sowie mit mindestens einem Rechner mit Anzeigeeinrichtung, wobei die Kraftstoffabgabe über einen oder mehrere Zapfschläuche erfolgt, wobei mindestens ein Zapfschlauch zur Abgabe von mindestens zwei Kraftstoffsorten über eine an diesen Zapfschlauch anschließbare Zapfpistole ausgelegt ist. Die Erfindung betrifft ferner ein Verfahren zum Betrieb einer solchen Vorrichtung.

Bei den aus der Praxis bekannten Zapfstellen ist es notwendig, daß für jede Kraftstoffsorte, beispielsweise Benzin, Super bleifrei, Super plus, Diesel oder Diesel schwefelarm, ein gesonderter Zapfschlauch verwendet wird, da in einem jedem Zapfschlauch nur ein Strömungskanal für ein Medium ausgebildet ist, über das der Kraftstoff ausgehend von einem Kraftstoffanschluß an einer jeden Zapfstelle zu einer Zapfpistole strömt, über welche der Benutzer der Zapfstelle den Kraftstoff entnehmen kann. Darüber hinaus ist es aus dem Firmenprospekt "Blending with Gilbarco - 1993" der Firma Gilbarco Inc. bekannt, daß die Kraftstoffabgabe von zwei Kraftstoffsorten über einen Zapfschlauch erfolgt, wobei dieser abgabeseitig mit einer Zapfpistole versehen ist, die für die Abgabe zweier unterschiedlicher Kraftstoffsorten ausgelegt ist.

Weiterhin ist es aus der Praxis bei Tankanlage mit Gasrückführung bekannt, neben der Befüllung von Kraftfahrzeugen mit Kraftstoff gleichzeitig über den flexiblen Zapfschlauch die aus dem zu betankenden Tank austretenden Gase in den Erdtank zurückzuführen. Zu diesen Zweck besteht der Zapfschlauch aus zwei ineinandergesteckten, koaxial angeordneten Schläuchen, wobei der innere Schlauch zur Rückführung der aus dem Tank austretenden Gase in den Erdtank dient, während über den den Gasrückführungsschlauch koaxial umgebenden Schlauch der Kraftstoff zugeführt wird. Die Verwendung jeweils eines Schlauches für eine jede Kraftstoffsorte ist einerseits sehr kostenintensiv und nimmt andererseits sehr viel Platz in Anspruch, wenn bis zu fünf Zapfschläuche nebeneinander an einer jeden Zapfstelle angeordnet werden müssen.

Der Erfindung liegt die **Aufgabe** zugrunde, für eine Vorrichtung der eingangs genannten Art ein wirtschaftlich zu fertigendes und darüber hinaus flexibles Abgabesystem für Kraftstoffe zu schaffen. Eine weitere Aufgabe besteht darin, ein Verfahren zum Betrieb einer Vorrichtung der eingangs genannten Art bereitzustellen, welche eine einfache und sichere Betätigung der Vorrichtung gewährleistet.

Vorrichtungsmäßig ist die **Lösung** dieser Aufgabenstellung erfindungsgemäß dadurch gekennzeichnet, daß der Zapfschlauch zur Abgabe der mindestens zwei Kraftstoffsorten wenigstens zwei voneinander getrennte Strömungskanäle aufweist, wobei für eine strömungstechnische Verbindung von Zapfschlauch und Zapfpistole ein Kupplungsstück vorgesehen ist, das einen mit dem Zapfschlauch korrespondierenden Schlauchanschlußstutzen aufweist. Durch diese Möglichkeit, mehrere Kraftstoffsorten über einen Zapfschlauch und eine an diesen Zapfschlauch angeschlossene Zapfpistole auszugeben, ist es beispielsweise möglich, die Kraftstoffsorten Diesel und Diesel schwefelarm über einen Zapfschlauch und die Kraftstoffsorten Benzin, Super bleifrei und Super plus über einen anderen Zapfschlauch auszugeben, so daß eine solchermaßen ausgerüstete Zapfstelle über nur zwei Zapfschläuche verfügt, obwohl fünf Kraftstoffsorten abgegeben werden können. Selbstverständlich ist es auch möglich, alle fünf Kraftstoffsorten über nur einen Zapfschlauch abzugeben. Weiterhin wird vorgeschlagen, daß in dem Zapfschlauch zur Abgabe unterschiedlicher Kraftstoffsorten mehrere Strömungskanäle für Kraftstoffe und mindestens ein Strömungskanal für die Gasrückführung ausgebildet sind. Ein solchermaßen ausgestalteter Zapfschlauch ist besonders flexibel einsetzbar, da gleichzeitig oder nacheinander verschiedene Kraftstoffsorten durch diesen Zapfschlauch geleitet werden können und auch direkt durch diesen Zapfschlauch die Gasrückführung zum Erdtank erfolgen kann. Jeder Strömungskanal in dem gleichzeitig mit mehreren Strömungskanälen ausgerüsteten Zapfschlauch weist dabei vorteilhafterweise einen über die gesamte Länge im wesentlichen konstanten Querschnitt auf. Die Querschnittsflächen und die Querschnittsformen der einzelnen in dem flexiblen Material ausgebildeten Strömungskanäle können jedoch unterschiedlich ausgebildet sein. So ist es beispielsweise möglich, die Strömungskanäle rund und/oder kreisringsegmentförmig auszugestalten.

Die Formstabilität eines solchen Zapfschlauches für eine erfindungsgemäße Vorrichtung kann dadurch erhöht werden, daß die einzelnen Strömungskanäle durch im wesentlichen radial verlaufende Stege voneinander getrennt sind, wobei die Stege aus dem gleichen Material wie der Zapfschlauch bestehen. Zur Verstärkung des Zapfschlauches wird schließlich vorgeschlagen, daß in das flexible Material des Zapfschlauches ein Gewebematerial eingearbeitet ist.

Zum Verbinden des mindestens einen Zapfschlauches zur Abgabe mehrerer Kraftstoffsorten mit den Kraftstoffzuleitungen in der Zapfstelle ist ein erstes Kupplungsstück vorgesehen, welches Aufnahmebohrungen zum Anschließen der Kraftstoffzuleitungen sowie Schlauchanschlußstutzen zur Kontaktierung mit dem Zapfschlauch aufweist. Dieses erste Kupplungsstück stellt die Schnittstelle Zapfstelle/Zapfschlauch dar. Gemäß einer bevorzugten Ausführungsform dieses ersten Kupplungsstücks weisen die Aufnahmebohrungen zum Anschließen der Kraftstoffzuleitungen Innengewinde auf, in die Kraftstoffzuleitungen einschraubbar sind. Diese Ausführungsform ermöglicht auf einfache Weise einen leicht zu montierenden und sicher abzudichtenden Anschluß der Kraftstoffzuleitungen.

Um auch zapfschlauchseitig einen leicht zu montierenden und sicher abzudichtenden Anschluß des ersten Kupplungsstückes zu erhalten, wird vorgeschlagen, daß die Querschnitte der einzelnen Schlauchanschlußstutzen im wesentlichen an die Querschnitte der in dem Zapfschlauch ausgebildeten, jeweils zu kontaktierenden Strömungskanäle angepaßt sind. Gemäß einer bevorzugten Ausführungsform der Erfindung sind die Schlauchanschlußstutzen vom ersten Kupplungsstück fort sich konisch verjüngend ausgebildet. Diese konische Verjüngung der Schlauchanschlußstutzen ermöglicht einerseits ein leichtes Einsetzen der Schlauchanschlußstutzen in die jeweiligen Strömungskanäle des Zapfschlauches und andererseits eine sichere Abdichtung zwischen Schlauchanschlußstutzen und Zapfschlauch, da aufgrund der konischen Ausgestaltung der Schlauchanschlußstutzen der Zapfschlauch beim vollständigen Aufschieben auf das erste Kupplungsstück formschlüssig auf die Schlauchanschlußstutzen aufgepreßt wird.

Der sichere Halt des Zapfschlauches auf den Zapfanschlußstutzen des ersten Kupplungsstückes kann erfindungsgemäß dadurch verbessert werden, daß auf der Außenoberfläche mindestens eines Schlauchanschlußstutzens eine im wesentlichen umlaufende Riffelung ausgebildet ist. Durch diese beispielsweise sägezahnartige Ausbildung der Riffelung wird ein versehentliches Abrutschen des Zapfschlauches von den Schlauchanschlußstutzen infolge hoher Zugbelastungen auf den Zapfschlauch oder infolge eines hohen Innendruckes im Zapfschlauch nahezu ausgeschlossen.

Weiterhin wird mit der Erfindung vorgeschlagen, daß der Zapfschlauch über mindestens ein den Zapfschlauch umgreifendes Klemmelement an dem ersten Kupplungsstück festlegbar ist.

Gemäß einer vorteilhaften Ausführungsform der Erfindung ist in dem ersten Kupplungsstück eine zentrale Durchgangsbohrung ausgebildet, in die ein Verbindungsstück insbesondere zum Anschließen der Gasrückführung kraftschlüssig, beispielsweise durch Einschrauben, einsetzbar ist. Um das Einführen dieses Verbindungsstückes in den entsprechenden Strömungskanal des Zapfschlauches zu erleichtern und einen festen Sitz des Zapfschlauches auf dem Verbindungsstück zu gewährleisten, ist das Verbindungsstück zum Zapfschlauch hin konisch verjüngend ausgebildet. An dem dem Zapfschlauch gegenüberliegenden Ende weist das Verbindungsstück eine Aufnahmebohrung zum Anschließen an eine Kraftstoffzuleitung oder die Gasrückführung auf.

Zapfpistolenseitig ist der Zapfschlauch zur Abgabe von mehreren Kraftstoffsorten über ein zweites Kupplungsstück mit der Zapfpistole verbunden. Dieses zweite Kupplungsstück weist eine Nut zur Aufnahme einer Drehkupplung der Zapfpistole sowie Schlauchanschlußstutzen zur Kontaktierung mit dem Zapfschlauch auf. Um eine einfache und sicher abdichtende Kontaktierung des zweiten Kupplungsstückes an dem Zapfschlauch zu gewährleisten, sind die Querschnitte der einzelnen Schlauchanschlußstutzen im wesentlichen an die Querschnitte der in dem Zapfschlauch ausgebildeten, jeweils zu kontaktierenden Strömungskanäle angepaßt. Zur Erhöhung der Montagefreundlichkeit sowie zur Steigerung der Abdichtwirkung sind gemäß einer bevorzugten Ausführungsform die Schlauchanschlußstutzen vom zweiten Kupplungsstück fort sich konisch verjüngend ausgebildet. Aufgrund dieser konischen Ausbildung ergibt sich beim Aufschieben des Zapfschlauches auf die Schlauchanschlußstutzen ein formschlüssiger Preßsitz zwischen den Schlauchanschlußstutzen und dem Zapfschlauch.

Die Festigkeit des Sitzes des Zapfschlauches auf den Schlauchanschlußstutzen des zweiten Kupplungsstückes kann erfindungsgemäß dadurch gesteigert werden, daß auf der Außenoberfläche mindestens eines Schlauchanschlußstutzens eine im wesentlichen umlaufende Riffelung ausgebildet ist. Durch die beispielsweise sägezahnartige Ausbildung der Riffelung wird der Sitz des Zapfschlauches auf den Schlauchanschlußstutzen deutlich erhöht, so daß bei auftretenden Zugbelastungen die Gefahr minimiert wird, daß der Zapfschlauch versehentlich von den Schlauchanschlußstutzen abgezogen wird.

Zapfpistolenseitig gehen die in den einzelnen Schlauchanschlußstutzen ausgebildeten Strömungskanäle für die Kraftstoffe zur Zapfpistole hin in einen gemeinsamen Strömungskanal über. Um einen gleichmäßigen Kraftstofffluß vom Zapfschlauch in die Zapfpistole zu gewährleisten, ist der Übergangsbereich von den Schlauchanschlußstutzen zum gemeinsamen Strömungskanal wirbelarm, insbesondere sich zur Zapfpistole hin konisch verjüngend ausgebildet.

Gemäß einer vorteilhaften Ausführungsform der Erfindung ist in dem zweiten Kupplungsstück eine zentrale Durchgangsbohrung ausgebildet, in die ein Verbindungsstück zur Kontaktierung mit der Gasrückführleitung der Zapfpistole kraftschlüssig einsetzbar ist.

Weiterhin wird mit der Erfindung vorgeschlagen, daß der Zapfschlauch über mindestens ein den Zapfschlauch umgreifendes Klemmelement an dem zweiten Kupplungsstück festlegbar ist.

Die den Zapfschlauch umgreifenden, zur Festlegung am ersten und/oder zweiten Kupplungsstück dienenden Klemmelemente können gemäß einer ersten Ausführungsform beispielsweise als Rohr- oder Schlauchschellen ausgebildet sein.

Gemäß einer zweiten Ausführungsform sind die Klemmelemente als aus mindestens zwei Kreisringsegmenten gebildete Klemmringe ausgebildet, die in an den Kupplungsstücken ausgebildeten Nuten festlegbar sind.

Ein besonders guter Sitz der kreisringsegmentförmig ausgebildeten Klemmelemente auf dem Zapfschlauch kann dadurch erreicht werden, daß auf der Innenfläche mindestens eines Kreisringsegmentes des Klemmelementes eine in Umfangsrichtung dieses Kreisringsegments verlaufende Riffelung ausgebildet ist.

Schließlich wird mit der Erfindung vorgeschlagen, daß die Kreisringsegmente über ein die Kreisringsegmente umgreifendes Spannelement, beispielsweise eine Rohr- oder Schlauchstelle, auf dem Zapfschlauch festlegbar sind.

Die verfahrensmäßige **Lösung** zum Betrieb einer Vorrichtung der voranstehend genannten Art zur Abgabe von unterschiedlichen Kraftstoffsorten an einer Zapfstelle mit einer Wähleinrichtung zur Auswahl der abzugebenden Kraftstoffsorte ist gekennzeichnet durch die Verfahrensschritte:
a) Überwachen der Betätigung der Wähleinrichtung und der Entnahme der Zapfpistole;
b) Vergleichen von Kraftstoffsortenwahl und entnommener Zapfpistole und
c) Betätigen der kraftstoffspezifischen Kraftstoffabgabeeinrichtung.

Um sicherzustellen, daß bei der Betätigung der Wähleinrichtung vor der Entnahme der Zapfpistole nur eine Kraftstoffabgabeeinrichtung betätigt wird, die mit der gewählten Kraftstoffsorte übereinstimmt, wird erfindungsgemäß vorgeschlagen, daß die Kraftstoffsortenwahl und die Zapfpistolenwahl auf Übereinstimmung überprüft werden und ausschließlich bei Übereinstimmung die Abgabe des Kraftstoffes durch Freischalten der entsprechenden Kraftstoffabgabeeinrichtung ermöglicht wird.

Die Entnahme der richtigen Zapfpistole bei der Betätigung der Wähleinrichtung vor der Entnahme der Zapfpistole kann erfindungsgemäß dadurch erleichtert werden, daß die richtige Zapfpistole über eine Leuchtanzeige gekennzeichnet wird.

Weiterhin wird mit der Erfindung vorgeschlagen, daß bei der Entnahme der Zapfpistole vor der Betätigung der Wähleinrichtung ausschließlich die dieser Zapfpistole entsprechenden Teile der Wähleinrichtung zur Betätigung der kraftstoffspezifischen Kraftstoffabgabeeinrichtung in den Betriebsmodus geschaltet werden. Auf diese Weise wird sichergestellt, daß bei der sogenannten "Nachwahl", das heißt der Betätigung der Kraftstoffsorten-Wähleinrichtung nach der Entnahme der Zapfpistole nur solche Kraftstoffsorten zu wählen sind, die auch durch diese Zapfpistole abgegeben werden können.

Weitere Einzelheiten und Merkmale der Erfindung ergeben sich aus der nachfolgenden Beschreibung der zugehörigen Zeichnung, in der ein Ausführungsbeispiel einer erfindungsgemäß ausgebildeten Vorrichtung zur Abgabe von unterschiedlichen Kraftstoffsorten an einer Zapfstelle schematisch dargestellt ist. In der Zeichnung zeigt:
- Fig. 1: eine schematische Vorderansicht einer erfindungsgemäß ausgestalteten Zapfstelle;
- Fig. 2: einen Querschnitt durch eine Ausführungsform eines Zapfschlauches zur Abgabe mehrerer Kraftstoffsorten;
- Fig. 3: einen Längsschnitt durch eine schematische Darstellung eines Zapfschlauches mit einem daran festgelegten ersten und zweiten Kupplungsstück zur Kontaktierung mit den Kraftstoffzuleitungen bzw. der Zapfpistole;
- Fig. 4a: einen Längsschnitt durch das erste Kupplungsstück;
- Fig. 4b: eine Draufsicht auf das erste Kupplungsstück;
- Fig. 4c: eine Untersicht des ersten Kupplungsstückes;
- Fig. 5a: einen Längsschnitt durch das zweite Kupplungsstück und
- Fig. 5b: eine Draufsicht auf das zweite Kupplungsstück.

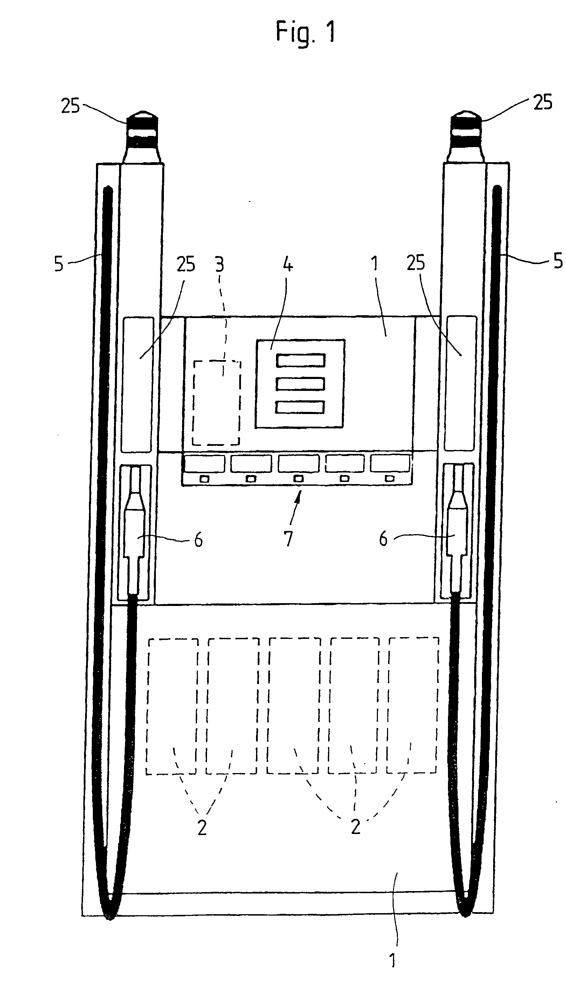

Fig. 1 zeigt eine schematische Ansicht einer Zapfstelle zur Abgabe von fünf Kraftstoffsorten. Zur Förderung und Ausgabe der Kraftstoffe ist in einem unteren Zapfstellengehäuse 1 für jede Kraftstoffsorte jeweils eine Kraftstoffabgabeeinrichtung 2 angeordnet, welche im dargestellten Ausführungsbeispiel aus einer Kraftstoff-Förderpumpe, einem Durchflußmesser und einem Impulsgeber besteht. Selbstverständlich ist es auch möglich, beispielsweise nur einen Impulsgeber pro Zapfstelle vorzusehen und/oder die Kraftstoff-Förderpumpe außerhalb des Zapfstellengehäuses 1, nämlich beispielsweise an oder in dem Erdtank anzuordnen. Zur Ermittlung der abgegebenen Kraftstoffmenge sowie zur Errechnung des Preises ist in dem oberen Teil des Zapfstellengehäuses 1 ein Rechner 3 angeordnet. Ebenfalls im oberen Zapfstellengehäuse 1 ist eine Anzeigeeinrichtung 4 angeordnet, die den Bediener der Zapfstelle über die abgegebene Kraftstoffmenge, den Kraftstoffpreis pro Liter sowie den Gesamtpreis für die abgegebene Kraftstoffmenge informiert.

Als Besonderheit dieser Zapfstelle fällt auf, daß diese Zapfstelle über nur zwei Zapfschläuche 5 mit jeweils einer daran befestigten Zapfpistole 6 verfügt, obwohl diese Zapfstelle zur Abgabe von fünf Kraftstoffsorten dient. Diese dargestellte Ausführungsform einer Zapfstelle dient beispielsweise zur Abgabe der Kraftstoffe Benzin, Super bleifrei, Super plus, Diesel und Diesel schwefelarm. Einer der beiden Zapfschläuche 5 ist dabei zur Abgabe der beiden Dieselsorten und der andere Zapfschlauch zur Abgabe der drei Benzin- und Super-Kraftstoffsorten vorgesehen. Die Auswahl des jeweils abzugebenden Kraftstoffes erfolgt über eine unterhalb der Anzeigeeinrichtung 4 angeordnete Kraftstoff-Wähleinrichtung 7, über die die einzelnen Kraftstoffsorten einzeln angewählt werden können.

Um sicherzustellen, daß bei einer solchermaßen ausgerüsteten Zapfstelle keine Vermischung der einzelnen Kraftstoffsorten innerhalb der Zapfschläuche 5 stattfindet, sind in den Zapfschläuchen 5 mehrere getrennte Strömungskanäle 8 ausgebildet.

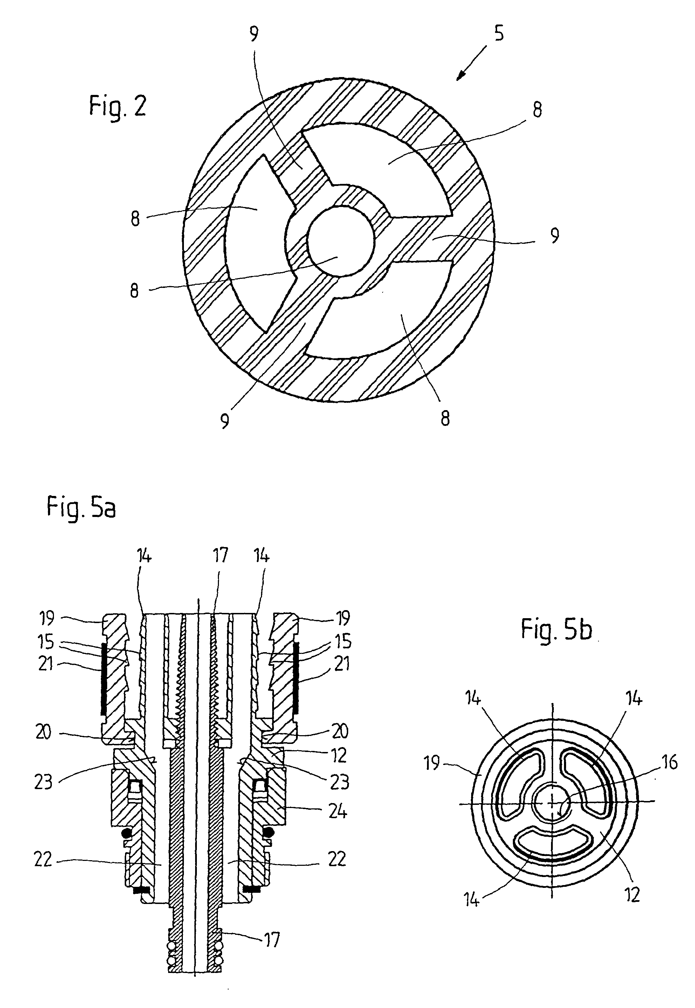

Bei dem in Fig. 2 dargestellten Ausführungsbeispiel eines solchen Zapfschlauches 5 sind innerhalb des Zapfschlauches 5 vier Strömungskanäle 8 ausgebildet. Bei dem dargestellten Ausführungsbeispiel ist in der Mitte des Zapfschlauches ein runder Strömungskanal 8 ausgebildet, welcher koaxial von drei kreisringsegmentförmigen Strömungskanälen 8 umgeben ist. In der Praxis kann ein solchermaßen ausgestalteter Zapfschlauch 5 beispielsweise so verwendet werden, daß über die drei kreisringsegmentförmig ausgebildeten Strömungskanäle 8 unterschiedliche Kraftstoffe, beispielsweise Benzin, Super bleifrei und Super plus, gefördert werden, während durch den mittig angeordneten runden Strömungskanal 8 die Gasrückführung zu einem (nicht dargestellten) Erdtank erfolgt. Bei dem dargestellten Ausführungsbeispiel sind die einzelnen kreisringsegmentförmig ausgebildeten Strömungskanäle 8 durch radial verlaufende Stege 9 voneinander getrennt. Neben der Trennung der einzelnen Strömungskanäle 8 voneinander wird durch die Ausbildung der Stege 9 zusätzlich zu der Materialbeschaffenheit des aus einem flexiblen Material, beispielsweise einem Gummi-Material, bestehenden Zapfschlauches 5 eine Erhöhung der Formstabilität eines solchermaßen ausgebildeten Zapfschlauches 5 erreicht. Weiterhin kann die Stabilität des Zapfschlauches 5 dadurch erhöht werden, daß in das flexible Material des Zapfschlauches 5 ein (nicht dargestelltes) Gewebematerial eingearbeitet ist.

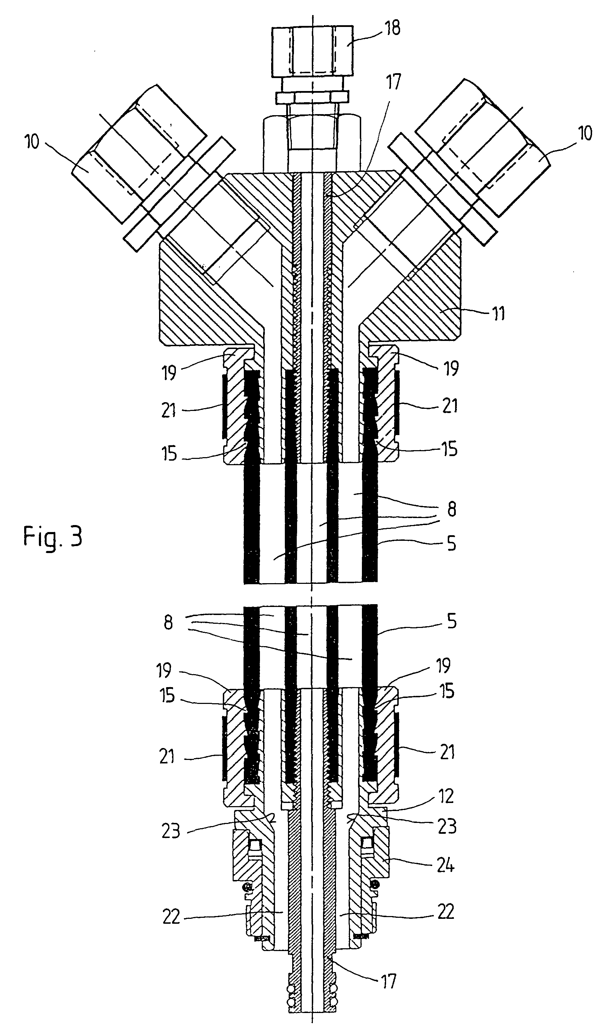

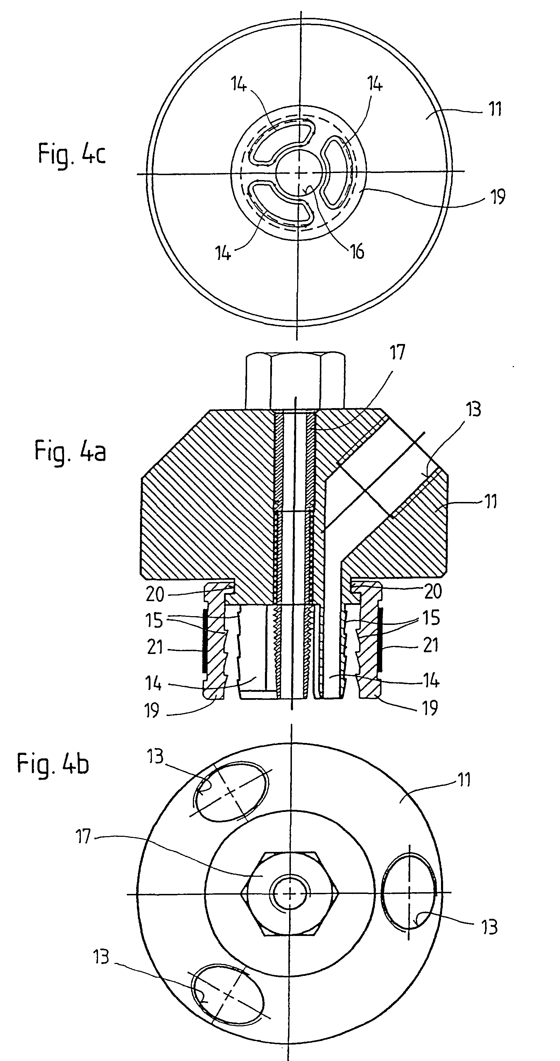

Die Verbindung eines jeden der beiden in Fig. 1 dargestellten Zapfschläuche 5 einerseits mit Kraftstoffzuleitungen 10 in der Zapfstelle und andererseits mit der Zapfpistole 6 erfolgt über ein erstes Kupplungsstück 11 und ein zweites Kupplungsstück 12, wie dies schematisch in Fig. 3 dargestellt ist. Details des ersten Kupplungsstückes 11 können den Abbildungen Fig. 4a bis Fig. 4c und Details des zweiten Kupplungsstückes 12 den Abbildungen 5a und 5b entnommen werden.

Zur Verbindung des Zapfschlauches 5 mit den Kraftstoffzuleitungen 10 in der Zapfstelle weist das erste Kupplungsstück 11 Aufnahmebohrungen 13 auf, in die bei der dargestellten Ausführungsform die Kraftstoffzuleitungen 10 einschraubbar sind. Die Kontaktierung mit dem Zapfschlauch 5 erfolgt über an der Unterseite des ersten Kupplungsstückes 11 angeordnete Schlauchanschlußstutzen 14, welche - wie insbesondere aus Fig. 4c ersichtlich - in ihren Querschnittsformen an die Querschnittsformen der in dem Zapfschlauch 5 ausgebildeten Strömungskanäle 8 angepaßt sind. Wie aus Fig. 3 ersichtlich, wird der Zapfschlauch 5 so auf die Schlauchanschlußstutzen 14 aufgeschoben, daß die Schlauchanschlußstutzen 14 in die Strömungskanäle 8 eingreifen. Um einerseits ein leichtes Aufsetzen des Schlauches 5 auf die Schlauchanschlußstutzen 14 zu ermöglichen und andererseits einen festen und abdichtenden Halt des Zapfschlauches 5 auf den Schlauchanschlußstutzen 14 zu erhalten, sind die Schlauchanschlußstutzen 14 vom ersten Kupplungsstück 11 fortweisend sich konisch verjüngend ausgebildet. Bei der dargestellten Ausführungsform des ersten Kupplungsstückes 11 sind die Außenoberflächen der Schlauchanschlußstutzen 14 mit einer sägezahnartigen Riffelung 15 versehen, welche einem Abziehen des Zapfschlauches 5 von den Schlauchanschlußstutzen 14 entgegenwirken.

Wie insbesondere aus Fig. 3 und 4a ersichtlich, weist das erste Kupplungsstück 11 eine zentrale Durchgangsbohrung 16 auf, in die ein Verbindungsstück 17 durch Einschrauben kraftschlüssig einsetzbar ist. Beim dargestellten Ausführungsbeispiel dient das Verbindungsstück 17 zum Anschluß an eine Gasrückführleitung 18 der Zapfstelle. Der in den Zapfschlauch 5 einzufügende Bereich des Verbindungsstückes 17 ist ähnlich wie die Schlauchanschlußstutzen 14 zum Zapfschlauch 5 hin sich konisch verjüngend ausgebildet. Wie aus Fig. 3 ersichtlich, wird der Halt des Zapfschlauches 5 auf den Schlauchanschlußstutzen 14 erhöht, wenn das Verbindungsstück 17 erst dann in die Durchgangsbohrung 16 des ersten Kupplungsstückes 11 eingeschraubt wird, nachdem der Zapfschlauch 5 bereits auf die Schlauchanschlußstutzen 14 aufgesetzt wurde. Durch das konisch ausgebildete Verbindungsstück 17 wird der innere Bereich des Zapfschlauches 15 auseinandergedrückt und zwischen den inneren Außenwänden der Schlauchanschlußstutzen 14 verpreßt.

Zusätzlich zu dieser Klemmwirkung des Zapfschlauches 5 auf den Schlauchanschlußstutzen 14 sowie zur Ausbildung der Riffelung 15 auf der Außenoberfläche der Schlauchanschlußstutzen 14 kann der Halt des Zapfschlauches 5 an dem ersten Kupplungsstück 11 durch ein den Zapfschlauch 5 umgreifendes Klemmelement 19 erhöht werden, wie dies in Fig. 3 und 4a dargestellt ist. Bei dem dargestellten Ausführungsbeispiel greift das Klemmelement 19 in eine an dem ersten Kupplungsstück 11 ausgebildete Nut 20 ein und wird zusätzlich von einem das Klemmelement 19 umgebenden Spannelement 21, beispielsweise einer Schlauchschelle, zusammengehalten. Auf der Innenseite des Klemmelementes 19 ist eine der Riffelung 15 der Schlauchanschlußstutzen 14 entsprechende Riffelung 15 ausgebildet, durch welche ein Abziehen des Zapfschlauches 5 von den Schlauchanschlußstutzen 14 zusätzlich erschwert wird.

Bei dem dargestellten Ausführungsbeispiel eines ersten Kupplungsstückes 11 sind drei Aufnahmebohrungen 13 zum Anschließen von Kraftstoffzuleitungen 10 sowie eine Durchgangsbohrung 16 zum Einfügen des Verbindungsstückes 17 für die Gasrückführleitung 18 vorgesehen. Wenn weniger Kraftstoffzuleitungen 10 angeschlossen werden sollen, können die nicht zu besetzenden Aufnahmebohrungen 13 durch (nicht dargestellte) Blindstopfen verschlossen werden.

Das zum Kontaktieren des Zapfschlauches 5 mit der Zapfpistole 6 notwendige zweite Kupplungsstück 12 ist ähnlich aufgebaut wie das erste Kupplungsstück 11. Zur Kontaktierung mit den Strömungskanälen 8 des Zapfschlauches 5 weist auch das zweite Kupplungsstück 12 Schlauchanschlußstutzen 14 auf, die zum Zapfschlauch 5 hin sich konisch verjüngend ausgebildet sind und auf deren Außenoberflächen eine sägezahnförmige Riffelung zur Erhöhung der Klemmwirkung des Zapfschlauches 5 auf den Schlauchanschlußstutzen 14 ausgebildet ist. Bei dem dargestellten Ausführungsbeispiel des zweiten Kupplungsstückes 12 ist ebenso wie beim ersten Kupplungsstück 11 ein den Zapfschlauch 5 umgreifendes, in eine Nut 20 des zweiten Kupplungsstückes 12 eingesetztes Klemmelement 19 vorgesehen, welches zusätzlich ein das Klemmelement 19 umgreifendes Spannelement 21 aufweist.

Wie insbesondere aus Fig. 3 und 5a ersichtlich, gehen die in den Schlauchanschlußstutzen 14 ausgebildeten, dem Kraftstofftransport dienenden Strömungskanäle 8 zur Zapfpistole 6 hin in einen gemeinsamen Strömungskanal 22 über. Der Übergangsbereich 23 zwischen den einzelnen Strömungskanälen 8 und dem gemeinsamen Strömungskanal 22 ist wirbelarm - im vorliegenden Fall konisch - ausgebildet, um einen gleichmäßigen Kraftstofffluß vom Zapfschlauch 5 hin zur Zapfpistole 6 zu erreichen.

Auch das zweite Kupplungsstück 12 weist wiederum eine Durchgangsbohrung 16 zur Aufnahme eines Verbindungsstückes 17 auf. Das zapfpistolenseitige Verbindungsstück 17 dient zum Anschließen an eine (nicht dargestellte) Gasrückführleitung der Zapfpistole 6. Aus Gründen der Übersicht ist bei den Darstellungen in Fig. 3 und 5a nicht die Zapfpistole 6, sondern nur eine Drehkupplung 24 zum Anschließen der Zapfpistole 6 dargestellt.

Mit einer solchermaßen ausgestalteten Zapfstelle ist es somit bei der Verwendung von nur zwei Zapfschläuchen 5 möglich, fünf verschiedene Kraftstoffsorten abzugeben, ohne daß für jede Kraftstoffsorte ein separater Zapfschlauch 5 notwendig ist.

Der Betrieb einer solchermaßen ausgestalteten Zapfstelle erfolgt folgendermaßen:

Beim Betrieb dieser Zapfstelle ist prinzipiell zwischen zwei verschiedenen Bedienungsformen zu unterscheiden, nämlich der "Vorwahl" und der "Nachwahl" der Kraftstoffsorte über die Wähleinrichtung 7. Bei der "Vorwahl" betätigt der Benutzer der Zapfstelle die Wähleinrichtung zur Auswahl der abzugebenden Kraftstoffsorte vor der Entnahme der Zapfpistole 6. Nach der Betätigung der Wähleinrichtung 7 kann beispielsweise durch eine Leuchtanzeige 25 dem Benutzer signalisiert werden, welcher Zapfschlauch 5 und welche Zapfpistole 6 zu der gewählten Kraftstoffsorte gehören. Nach der anschließenden Entnahme der Zapfpistole 6 findet im Rechner 3 der Zapfstelle ein Abgleich statt, in dem überprüft wird, ob die gewählte Kraftstoffsorte und die entnommene Zapfpistole 6 übereinstimmen. Nur bei einem positiven Ergebnis dieses Abgleiches wird die Freischaltung der kraftstoffspezifischen Kraftstoffabgabeeinrichtung durch den Rechner 3 freigeschaltet.

Bei der sogenannten "Nachwahl" greift der Benutzer die Zapfpistole 6 vor der Betätigung der Wähleinrichtung 7 zur Auswahl der Kraftstoffsorte. Bei dieser Bedienungsart werden nach der Entnahme der Zapfpistole 6 über den Rechner 3 nur die Teile der Wähleinrichtung 7 in den Betriebsmodus geschaltet, die die Abgabe einer durch diesen Zapfschlauch 5 abzugebenden Kraftstoffsorte ermöglichen.

Durch diese Betriebsweise wird sichergestellt, daß Kraftstoffwahl und Wahl der Zapfpistole 6 bzw. des Zapfschlauches 5 immer übereinstimmen bzw. beim Nichtvorliegen einer Übereinstimmung keine Kraftstoffabgabe erfolgt.

### Bezugszeichenliste

- 1: Zapfstellengehäuse
- 2: Kraftstoffabgabeeinrichtung
- 3: Rechner
- 4: Anzeigeeinrichtung
- 5: Zapfschlauch
- 6: Zapfpistole
- 7: Wähleinrichtung
- 8: Strömungskanal
- 9: Steg
- 10: Kraftstoffzuleitung
- 11: erstes Kupplungsstück
- 12: zweites Kupplungsstück
- 13: Aufnahmebohrung
- 14: Schlauchanschlußstutzen
- 1 5: Riffelung
- 16: Durchgangsbohrung
- 17: Verbindungsstück
- 18: Gasrückführleitung
- 19: Klemmelement
- 20: Nut
- 21: Spannelement
- 22: Strömungskanal
- 23: Übergangsbereich
- 24: Drehkupplung
- 25: Leuchtanzeige

## Patentansprüche

1. Vorrichtung zur Abgabe von unterschiedlichen Kraftstoffsorten an einer Zapfstelle mit mindestens einer aus einer Kraftstoff-Förderpumpe und einem Durchflußmesser bestehenden Kraftstoffabgabeeinrichtung (2) sowie mindestens einem Rechner (3) mit Anzeigeeinrichtung (4), wobei die Kraftstoffabgabe über einen oder mehrere Zapfschläuche (5) erfolgt, wobei mindestens ein Zapfschlauch (5) zur Abgabe von mindestens zwei Kraftstoffsorten über eine an diesen Zapfschlauch (5) anschließbare Zapfpistole (6) ausgelegt ist,
**dadurch gekennzeichnet,**
**daß** der Zapfschlauch (5) zur Abgabe der mindestens zwei Kraftstoffsorten wenigstens zwei voneinander getrennte Strömungskanäle aufweist, wobei für eine strömungstechnische Verbindung von Zapfschlauch (5) und Zapfpistole (6) ein Kupplungsstück (12) vorgesehen ist, das einen mit dem Zapfschlauch (5) korrespondierenden Schlauchanschlußstutzen (14) aufweist.

2. Vorrichtung nach Anspruch 1, **dadurch gekennzeichnet, daß** der Zapfschlauch (5) zur Abgabe unterschiedlicher Kraftstoffsorten aus einem flexiblen Material, insbesondere einem Gummi-Material, besteht.

3. Vorrichtung nach Anspruch 2, **dadurch gekennzeichnet, daß** in dem Zapfschlauch (5) zur Abgabe unterschiedlicher Kraftstoffsorten mehrere Strömungskanäle (8) für Kraftstoffe und mindestens ein Strömungskanal (8) für die Gasrückführung ausgebildet sind.

4. Vorrichtung nach Anspruch 1 oder 2, **dadurch gekennzeichnet, daß** jeder Strömungskanal (8) einen über die gesamte Länge des Zapfschlauches (5) im wesentlichen konstanten Querschnitt aufweist, wobei die Querschnittsflächen und Querschnittsformen einzelner Strömungskanäle (8) unterschiedlich ausbildbar sind.

5. Vorrichtung nach mindestens einem der Ansprüche 2 bis 4, **dadurch gekennzeichnet, daß** die einzelnen Strömungskanäle (8) durch im wesentlichen radial verlaufende, aus dem Zapfschlauchmaterial bestehende Stege (9) voneinander getrennt sind.

6. Vorrichtung nach mindestens einem der Ansprüche 2 bis 5, **dadurch gekennzeichnet, daß** in das flexible Material des Zapfschlauches (5) ein Gewebematerial eingearbeitet ist.

7. Vorrichtung nach mindestens einem der Ansprüche 1 bis 6, **dadurch gekennzeichnet, daß** der mindestens eine Zapfschlauch (5) zur Abgabe von mehreren Kraftstoffsorten über ein erstes Kupplungsstück (11) mit Kraftstoffzuleitungen (10) in der Zapfstelle verbunden ist, wobei dieses erste Kupplungsstück (11) Aufnahmebohrungen (13) zum Anschließen der Kraftstoffzuleitungen (10) sowie Schlauchanschlußstutzen (14) zur Kontaktierung mit dem Zapfschlauch (5) aufweist.

8. Vorrichtung nach Anspruch 7, **dadurch gekennzeichnet, daß** die Aufnahmebohrungen (13) Innengewinde aufweisen, in die die Kraftstoffzuleitungen (10) einschraubbar sind.

9. Vorrichtung nach Anspruch 7, **dadurch gekennzeichnet, daß** die Querschnitte der einzelnen Schlauchanschlußstutzen (14) im wesentlichen an die Querschnitte der in dem Zapfschlauch (5) ausgebildeten, jeweils zu kontaktierenden Strömungskanäle (8) angepaßt sind.

10. Vorrichtung nach Anspruch 9, **dadurch gekennzeichnet, daß** die Schlauchanschlußstutzen (14) vom ersten Kupplungsstück (11) fort sich konisch verjüngend ausgebildet sind.

11. Vorrichtung nach Anspruch 9 oder 10, **dadurch gekennzeichnet, daß** auf der Außenoberfläche mindestens eines Schlauchanschlußstutzens (14) eine im wesentlichen umlaufende Riffelung (15) ausgebildet ist.

12. Vorrichtung nach mindestens einem der Ansprüche 7 bis 11, **dadurch gekennzeichnet, daß** in dem ersten Kupplungsstück (11) eine zentrale Durchgangsbohrung (16) ausgebildet ist, in die ein Verbindungsstück (17) insbesondere für die Gasrückführung kraftschlüssig einsetzbar ist.

13. Vorrichtung nach Anspruch 12, **dadurch gekennzeichnet, daß** das Verbindungsstück (17) zum Zapfschlauch (5) hin sich konisch verjüngend ausgebildet ist.

14. Vorrichtung nach Anspruch 12 oder 13, **dadurch gekennzeichnet, daß** das Verbindungsstück (17) an dem dem Zapfschlauch (5) gegenüberliegenden Ende eine Aufnahmebohrung zum Anschließen an eine Kraftstoffzuleitung oder eine Gasrückführung aufweist.

15. Vorrichtung nach mindestens einem der Ansprüche 7 bis 14, **dadurch gekennzeichnet, daß** der Zapfschlauch (5) über mindestens ein den Zapfschlauch (5) umgreifendes Klemmelement (19) an dem ersten Kupplungsstück (11) festlegbar ist.

16. Vorrichtung nach Anspruch 15, **dadurch gekennzeichnet, daß** das zweite Kupplungsstück (12), über das der mindestens eine Zapfschlauch (5) mit der Zapfpistole (6) verbunden ist, neben dem Schlauchanschlußstutzen (14) zur Kontaktierung mit dem Zapfschlauch (15) auch eine Nut zur Aufnahme einer Drehkupplung (24) der Zapfpistole (6) aufweist.

17. Vorrichtung nach Anspruch 16, **dadurch gekennzeichnet, daß** die Querschnitte der einzelnen Schlauchanschlußstutzen (14) im wesentlichen an die Querschnitte der in dem Zapfschlauch (5) ausgebildeten, jeweils zu kontaktierenden Strömungskanäle (8) angepaßt sind.

18. Vorrichtung nach Anspruch 16 oder 17, **dadurch gekennzeichnet, daß** die Schlauchanschlußstutzen (14) vom zweiten Kupplungsstück (12) fort sich konisch verjüngend ausgebildet sind.

19. Vorrichtung nach mindestens einem der Ansprüche 16 bis 18, **dadurch gekennzeichnet, daß** auf der Außenoberfläche mindestens eines Schlauchanschlußstutzens (14) eine im wesentlichen umlaufende Riffelung (15) ausgebildet ist.

20. Vorrichtung nach mindestens einem der Ansprüche 16 bis 19, **dadurch gekennzeichnet, daß** die in den einzelnen Schlauchanschußstutzen (14) des zweiten Kupplungsstückes (12) ausgebildeten Strömungskanäle (8) zur Zapfpistole (6) hin in einen gemeinsamen Strömungskanal (22) übergehen.

21. Vorrichtung nach Anspruch 20, **dadurch gekennzeichnet, daß** der Übergangsbereich (23) von den Strömungskanälen (8) der Schlauchanschlußstutzen (14) hin zum gemeinsamen Strömungskanal (22) wirbelarm, insbesondere sich zur Zapfpistole (6) hin konisch verjüngend ausgebildet ist.

22. Vorrichtung nach mindestens einem der Ansprüche 16 bis 21, **dadurch gekennzeichnet, daß** in dem zweiten Kupplungsstück (12) eine zentrale Durchgangsbohrung (16) ausgebildet ist, in die ein Verbindungsstück (17) zur Kontaktierung mit der Gasrückführleitung (18) der Zapfpistole (6) kraftschlüssig einsetzbar ist.

23. Vorrichtung nach mindestens einem der Ansprüche 16 und 22, **dadurch gekennzeichnet, daß** der Zapfschlauch (5) über mindestens ein den Zapfschlauch (5) umgreifendes Klemmelement (19) an dem zweiten Kupplungsstück (12) festlegbar ist.

24. Vorrichtung nach mindestens einem der Ansprüche 15 und 23, **dadurch gekennzeichnet, daß** das Klemmelement (19) als Rohr- oder Schlauchstück ausgebildet ist.

25. Vorrichtung nach mindestens einem der Ansprüche 15 und 23, **dadurch gekennzeichnet, daß** das Klemmelement (19) als aus mindestens zwei Kreissegmenten gebildeter Klemmring ausgebildet ist.

26. Vorrichtung nach Anspruch 25, **dadurch gekennzeichnet, daß** auf der Innenfläche mindestens eines Kreissegmentes des Klemmelementes (19) eine in Umfangsrichtung dieses Kreisringsegmentes verlaufende Riffelung (15) ausgebildet ist.

27. Vorrichtung nach Anspruch 25 oder 26, **dadurch gekennzeichnet, daß** die Kreisringsegmente des Klemmelementes (19) in einer an dem ersten (11) oder zweiten Kupplungsstück (12) ausgebildeten Nut (20) festlegbar sind.

28. Vorrichtung nach mindestens einem der Ansprüche 25 bis 27, **dadurch gekennzeichnet, daß** die Kreisringsegmente des Klemmelementes (19) über ein die Kreisringsegmente umgreifendes Spannelement (21), beispielsweise eine Rohr- oder Schlauchschelle, auf dem Zapfschlauch (5) festlegbar sind.

29. Verfahren mit und zum Betrieb von einer Vorrichtung zur Abgabe von unterschiedlichen Kraftstoffsorten an einer Zapfstelle nach mindestens einem der Ansprüche 1 bis 28 mit einer Wähleinrichtung (7) zur Auswahl der abzugebenden Kraftstoffsorten,
**gekennzeichnet durch**
die Verfahrensschritte:
a) Überwachen der Betätigung der Wähleinrichtung (7) und der Entnahme der Zapfpistole (6);
b) Vergleichen von Kraftstoffsortenwahl und entnommener Zapfpistole (6) und
c) Betätigen der kraftstoffspezifischen Kraftstoffabgabeeinrichtung (2).

30. Verfahren nach Anspruch 29, **dadurch gekennzeichnet, daß** bei Betätigung der Wähleinrichtung (7) vor der Entnahme der Zapfpistole (6) die Kraftstoffsortenwahl und Zapfpistolenwahl auf Übereinstimmung überprüft werden und ausschließlich bei Übereinstimmung die Abgabe des Kraftstoffes durch Freischaltung der entsprechenden Kraftstoffabgabeeinrichtung (2) ermöglicht wird.

31. Verfahren nach Anspruch 29, **dadurch gekennzeichnet, daß** bei Entnahme der Zapfpistole (6) vor der Betätigung der Wähleinrichtung (7) ausschließlich die dieser Zapfpistole (6) entsprechenden Teile der Wähleinrichtung (7) zur Betätigung der kraftstoffspezifischen Kraftstoffabgabeeinrichtung (2) in den Betriebsmodus geschaltet werden.

32. Verfahren nach Anspruch 30, **dadurch gekennzeichnet, daß** bei Betätigung der Wähleinrichtung (7) vor der Entnahme der Zapfpistole (6) die der Kraftstoffwahl entsprechende Zapfpistole (6) über eine Leuchtanzeige (25) gekennzeichnet wird.

## Claims

1. Apparatus for dispensing different fuel grades at a filling station with at least one fuel-dispensing device (2), which comprises a fuel feed pump and a flow meter, and at least one computer (3) with an indication device (4), fuel being dispensed via one or more filling hoses (5), at least one filling hose (5) being designed for dispensing at least two fuel grades via a filling nozzle (6) that can be connected to this filling hose (5), **characterized in that** the filling hose (5) for dispensing the at least two fuel grades has at least two separate flow channels, a coupling piece (12), which has a hose connection stub (14) corresponding to the filling hose (5), being provided to connect the filling hose (5) and the filling nozzle (6) in terms of flow.

2. Apparatus according to Claim 1, **characterized in that** the filling hose (5) for dispensing different fuel grades is composed of a flexible material, in particular a rubber material.

3. Apparatus according to Claim 2, **characterized in that** a plurality of flow channels (8) for fuels and at least one flow channel (8) for the return of gas are formed in the filling hose (5) for dispensing different fuel grades.

4. Apparatus according to Claim 1 or 2, **characterized in that** each flow channel (8) has an essentially constant cross section over the entire length of the filling hose (5), it being possible to make the cross-sectional areas and cross-sectional shapes of individual flow channels (8) different.

5. Apparatus according to at least one of Claims 2 to 4, **characterized in that** the individual flow channels (8) are separated from one another by essentially radially extending webs (9) composed of the material of the filling hose.

6. Apparatus according to at least one of Claims 2 to 5, **characterized in that** a woven material is incorporated into the flexible material of the filling hose (5).

7. Apparatus according to at least one of Claims 1 to 6, **characterized in that** the at least one filling hose (5) for dispensing a plurality of fuel grades is connected by a first coupling piece (11) to fuel feed lines (10) in the filling station, this first coupling piece (11) having acceptance holes (13) for connecting the fuel feed lines (10) and hose connection stubs (14) for making contact with the filling hose (5).

8. Apparatus according to Claim 7, **characterized in that** the acceptance holes (13) have internal threads, into which the fuel feed lines (10) can be screwed.

9. Apparatus according to Claim 7, **characterized in that** the cross sections of the individual hose connection stubs (14) are essentially matched to the cross sections of the flow channels (8) which are formed in the filling hose (5) and with each of which contact is to be made.

10. Apparatus according to Claim 9, **characterized in that** the hose connection stubs (14) are designed to taper conically away from the first coupling piece (11).

11. Apparatus according to Claim 9 or 10, **characterized in that** essentially all-round ribbing (15) is formed on the outer surface of at least one hose connection stub (14).

12. Apparatus according to at least one of Claims 7 to 11, **characterized in that** a central through hole (16), into which a connecting piece (17) can be inserted nonpositively, in particular for the return of gas, is formed in the first coupling piece (11).

13. Apparatus according to Claim 12, **characterized in that** the connecting piece (17) is designed to taper conically towards the filling hose (5).

14. Apparatus according to Claim 12 or 13, **characterized in that** the connecting piece (17) has an acceptance hole for connection to a fuel feed line or a gas return at the end opposite the filling hose (5).

15. Apparatus according to at least one of Claims 7 to 14, **characterized in that** the filling hose (5) can be fixed on the first coupling piece (11) by means of at least one clamping element (19) surrounding the filling hose (5).

16. Apparatus according to Claim 15, **characterized in that** the second coupling piece (12), by means of which the at least one filling hose (5) is connected to the filling nozzle (6), has a groove to accept a rotary joint (24) of the filling nozzle (6), in addition to the hose connection stub (14) for making contact with the filling hose (15).

17. Apparatus according to Claim 16, **characterized in that** the cross sections of the individual hose connection stubs (14) are essentially matched to the cross sections of the flow channels (8) which are formed in the filling hose (5) and with each of which contact is to be made.

18. Apparatus according to Claim 16 or 17, **characterized in that** the hose connection stubs (14) are designed to taper conically away from the second coupling piece (12).

19. Apparatus according to at least one of Claims 16 to 18, **characterized in that** essentially all-round ribbing (15) is formed on the outer surface of at least one hose connection stub (14).

20. Apparatus according to at least one of Claims 16 to 19, **characterized in that** the flow channels (8) formed in the individual hose connection stubs (14) of the second coupling piece (12) merge into a common flow channel (22) towards the filling nozzle (6).

21. Apparatus according to Claim 20, **characterized in that** the transitional area (23) from the flow channels (8) of the hose connection stubs (14) to the common flow channel (22) is of low-swirl design, in particular being designed in such a way as to taper conically towards the filling nozzle (6).

22. Apparatus according to at least one of Claims 16 to 21, **characterized in that** a central through hole (16), into which a connecting piece (17) for making contact with the gas return line (18) of the filling nozzle (6) can be inserted nonpositively, is formed in the second coupling piece (12).

23. Apparatus according to at least one of Claims 16 and 22, **characterized in that** the filling hose (5) can be fixed on the second coupling piece (12) by means of at least one clamping element (19) surrounding the filling hose (5).

24. Apparatus according to at least one of Claims 15 and 23, **characterized in that** the clamping element (19) is designed as a piece of tube or hose.

25. Apparatus according to at least one of Claims 15 and 23, **characterized in that** the clamping element (19) is designed as a clamping ring formed from at least two circular segments.

26. Apparatus according to Claim 25, **characterized in that** the inner surface of at least one circular segment of the clamping element (19) has formed on it ribbing (15) extending in the circumferential direction of this circular-ring segment.

27. Apparatus according to Claim 25 or 26, **characterized in that** the circular-ring segments of the clamping element (19) can be fixed in a groove (20) formed on the first (11) or second coupling piece (12).

28. Apparatus according to at least one of Claims 25 to 27, **characterized in that** the circular-ring segments of the clamping element (19) can be fixed on the filling hose (5) by means of a clamping element (21), e.g. a pipe or hose clamp, surrounding the circular-ring segments.

29. Method involving and intended for the operation of an apparatus for dispensing different fuel grades at a filling station according to at least one of Claims 1 to 28, with a selecting device (7) for selecting the fuel grades to be dispensed, **characterized by** the following method steps:
a) monitoring the actuation of the selecting device (7) and the removal of the filling nozzle (6);
b) comparison of the choice of fuel grade and the filling nozzle (6) removed and
c) actuation of the fuel-dispensing device (2) specific to the fuel.

30. Method according to Claim 29, **characterized in that**, if the selecting device (7) is actuated before the filling nozzle (6) is removed, the choice of fuel grade and the choice of filling nozzle are checked to ensure that they match and dispensing of the fuel is allowed by enabling the corresponding fuel-dispensing device (2) only if they match.

31. Method according to Claim 29, **characterized in that**, if the filling nozzle (6) is removed before the selecting device (7) is actuated, only those parts of the selecting device (7) which correspond to this filling nozzle (6) are switched to the operating mode to actuate the fuel-dispensing device (2) specific to the fuel.

32. Method according to Claim 30, **characterized in that**, if the selecting device (7) is actuated before the filling nozzle (6) is removed, the filling nozzle (6) corresponding to the choice of fuel is indicated by an illuminated display (25).

## Revendications

1. Dispositif de distribution de carburants de différents types d'un seul poste d'essence, muni d'au moins un dispositif de distribution de carburants (2) constitué d'une pompe d'alimentation en carburant et d'un débitmètre, ainsi que d'au moins un calculateur (3) avec dispositif d'affichage (4), la distribution de carburants s'effectuant au moyen d'un ou de plusieurs tuyau(x) distributeur(s) (5), au moins un tuyau distributeur (5) étant conçu pour la distribution d'au moins deux types de carburants au moyen d'un pistolet distributeur (6) pouvant être raccordé à ce tuyau distributeur (5), **caractérisé en ce que** le tuyau distributeur (5), pour la distribution des deux types de carburants au moins, présente au moins deux canaux d'écoulement séparés l'un de l'autre, une pièce d'accouplement (12), présentant des raccords de tuyaux (14) correspondant au tuyau distributeur (5), étant prévue pour un raccordement relatif à la technique des fluides du tuyau distributeur (5) et du pistolet distributeur (6).

2. Dispositif selon la revendication 1, **caractérisé en ce que** le tuyau distributeur (5) pour la distribution de différents types de carburants est constitué d'un matériau flexible, notamment du caoutchouc.

3. Dispositif selon la revendication 2, **caractérisé en ce que** plusieurs canaux d'écoulement (8) pour carburants et au moins un canal d'écoulement (8) pour le retour du gaz sont formés dans le tuyau distributeur (5) pour la distribution de carburants de différents types.

4. Dispositif selon la revendication 1 ou 2, **caractérisé en ce que** chaque canal d'écoulement (8) présente une section essentiellement constante sur toute la longueur du tuyau distributeur (5), les superficies de la section et les formes de la section des canaux d'écoulement individuels (8) pouvant être formées différemment.

5. Dispositif selon au moins l'une quelconque des revendications 2 à 4, **caractérisé en ce que** les canaux d'écoulement individuels (8) sont séparés les uns des autres par des entretoises (9) essentiellement radiales, constituées du matériau du tuyau distributeur.

6. Dispositif selon au moins l'une quelconque des revendications 2 à 5, **caractérisé en ce qu'**un matériau en tissu est inséré dans le matériau flexible du tuyau distributeur (5).

7. Dispositif selon au moins l'une quelconque des revendications 1 à 6, **caractérisé en ce qu'**au moins l'un des tuyaux distributeurs (5) pour la distribution de carburants de différents types est raccordé aux conduites d'alimentation en carburant (10) au moyen d'une première pièce d'accouplement (11) dans le poste d'essence, cette première pièce d'accouplement (11) présentant des perçages de positionnement (13) pour le raccordement des conduites d'alimentation en carburant (10) ainsi que des raccords de tuyaux (14) pour la mise en contact avec le tuyau distributeur (5).

8. Dispositif selon la revendication 7, **caractérisé en ce que** les perçages de positionnement (13) présentent des filetages intérieurs dans lesquels peuvent être vissées les conduites d'alimentation en carburant (10).

9. Dispositif selon la revendication 7, **caractérisé en ce que** les sections des raccords de tuyaux individuels (14) sont adaptées essentiellement aux sections des canaux d'écoulement (8) à mettre en contact, formés dans le tuyau distributeur (5).

10. Dispositif selon la revendication 9, **caractérisé en ce que** les raccords de tuyaux (14) sont formés en se rétrécissant de manière conique à partir de la première pièce d'accouplement (11).

11. Dispositif selon la revendication 9 ou 10, **caractérisé en ce qu'**une cannelure (15) essentiellement périphérique est formée sur la surface extérieure d'au moins un raccord de tuyau (14).

12. Dispositif selon au moins l'une quelconque des revendications 7 à 11, **caractérisé en ce qu'**un alésage de passage (16) central est formé dans la première pièce d'accouplement (11), alésage dans lequel peut être insérée une pièce de raccordement (17) par adhérence, notamment pour le retour du gaz.

13. Dispositif selon la revendication 12, **caractérisé en ce que** la pièce de raccordement (17) est formée en se rétrécissant de manière conique vers le tuyau distributeur (5).

14. Dispositif selon la revendication 12 ou 13, **caractérisé en ce que** la pièce de raccordement (17) présente un perçage de positionnement pour le raccordement à une conduite d'alimentation en carburant ou à un retour de gaz, sur l'extrémité opposée au tuyau distributeur (5).

15. Dispositif selon au moins l'une quelconque des revendications 7 à 14, **caractérisé en ce que** le tuyau distributeur (5) peut être fixé sur la première pièce d'accouplement (11) au moyen d'au moins un élément de serrage (19) entourant le tuyau distributeur (5)

16. Dispositif selon la revendication 15, **caractérisé en ce que** la deuxième pièce d'accouplement (12), au moyen de laquelle au moins l'un des tuyaux distributeurs (5) est raccordé au pistolet distributeur (6), présente, en plus du raccord de tuyau (14) pour la mise en contact avec le tuyau distributeur (5), aussi une rainure pour loger un joint tournant (24) du pistolet distributeur (6).

17. Dispositif selon la revendication 16, **caractérisé en ce que** les sections des raccords de tuyaux individuels (14) sont essentiellement adaptées aux sections des canaux d'écoulement (8) à mettre en contact, formés dans le tuyau distributeur (5).

18. Dispositif selon la revendication 16 ou 17, **caractérisé en ce que** les raccords de tuyau (14) sont formés en se rétrécissant de manière conique à partir de la deuxième pièce d'accouplement (12).

19. Dispositif selon au moins l'une quelconque des revendications 16 à 18, **caractérisé en ce qu'**une cannelure (15) essentiellement périphérique est formée sur la surface extérieure d'au moins un raccord de tuyau (14).

20. Dispositif selon au moins l'une quelconque des revendications 16 à 19, **caractérisé en ce que** les canaux d'écoulement (8) formés dans les raccords de tuyaux (14) individuels de la deuxième pièce d'accouplement (12) dépassent en direction du pistolet distributeur (6) dans un canal d'écoulement (8) commun.

21. Dispositif selon la revendication 20, **caractérisé en ce que** la partie de transition (23) est formée en se rétrécissant de manière conique depuis les canaux d'écoulement (8) des raccords de tuyaux (14) en direction du canal d'écoulement (8) commun sans tourbillon, notamment vers le pistolet distributeur (6).

22. Dispositif selon au moins l'une quelconque des revendications 16 à 21, **caractérisé en ce qu'**un alésage de passage (16) central est formé dans la deuxième pièce de raccordement (12), dans lequel peut être insérée une pièce de raccordement (17) par adhérence pour la mise en contact avec la conduite de retour de gaz (18) du pistolet distributeur (6).

23. Dispositif selon au moins l'une quelconque des revendications 16 et 22, **caractérisé en ce que** le tuyau distributeur (5) peut être fixé à la deuxième pièce d'accouplement (12) au moyen d'au moins un élément de serrage (19) entourant le tuyau distributeur (5).

24. Dispositif selon au moins l'une quelconque des revendications 15 et 23, **caractérisé en ce que** l'élément de serrage (19) est formé comme pièce de tube ou de tuyau.

25. Dispositif selon au moins l'une quelconque des revendications 15 et 23, **caractérisé en ce que** l'élément de serrage (19) est formé comme un anneau de serrage formé à partir d'au moins deux segments de cercle.

26. Dispositif selon la revendication 25, **caractérisé en ce qu'**une cannelure (15) passant dans le sens de la circonférence de ce segment de cercle est formée sur la surface intérieure d'au moins un segment de cercle de l'élément de serrage (19).

27. Dispositif selon la revendication 25 ou 26, **caractérisé en ce que** les segments de l'anneau de cercle de l'élément de serrage (19) peuvent être fixés dans une rainure (20) formée sur la première pièce d'accouplement (11) ou la deuxième (12).

28. Dispositif selon au moins l'une quelconque des revendications 25 à 27, **caractérisé en ce que** les segments de l'anneau de cercle de l'élément de serrage (19) peuvent être fixés au tuyau distributeur (5) à l'aide d'un élément de serrage (21), par exemple un collier d'attache pour tuyau ou pour tube, entourant les segments de l'anneau de cercle.

29. Procédé avec et pour le fonctionnement d'un dispositif de distribution de carburants de types différents d'un seul poste d'essence selon au moins l'une quelconque des revendications 1 à 28 avec un dispositif de sélection (7) pour sélectionner les types de carburants à distribuer, **caractérisé par** les étapes de procédé :
a) surveillance de la commande du dispositif de sélection (7) et de la prise du pistolet distributeur (6) ;
b) comparaison de la sélection du type de carburant et du pistolet distributeur (6) pris ; et
c) commande du dispositif de distribution de carburant (2) spécifique au carburant.

30. Procédé selon la revendication 29, **caractérisé en ce que,** lors de la commande du dispositif de sélection (7) avant la prise du pistolet distributeur (6), la sélection du type de carburant et la sélection du pistolet distributeur sont vérifiées quant à leur correspondance et que la distribution du carburant est permise, exclusivement en cas de correspondance, par la déconnexion du dispositif de distribution de carburant (2) correspondant.

31. Dispositif selon la revendication 29, **caractérisé en ce que,** lors de la prise du pistolet distributeur (6) avant la commande du dispositif de sélection (7), seules les pièces du dispositif de sélection (7) correspondantes à ce pistolet distributeur (6) sont commutées en mode fonctionnement pour la commande du dispositif de distribution de carburant (2) spécifique au carburant.

32. Dispositif selon la revendication 30, **caractérisé en ce que,** lors de la commande du dispositif de sélection (7) avant la prise du pistolet distributeur (6), le pistolet distributeur (6) correspondant à la sélection du carburant est **caractérisé par** un affichage lumineux (25).
